# EUROPEAN PATENT APPLICATION

(11) **EP 3 686 069 A1**
(43) Date of publication of application: **29.07.2020**
(21) Application number: 18856739.0
(22) Date of filing: 25.04.2018
(51) Int. Cl.: B60S 5/06

(54) **LIFTING SYSTEM FOR BATTERY PACK REPLACEMENT OF VEHICLE**

(30) Priority: 12.09.2017 CN 201710819401; 14.12.2017 CN 201711342319
(71) Applicant: Nio Co., Ltd., Shanghai 201804 (CN)
(72) Inventor: DING, Xikun, Jiading Shanghai 201804 (CN); LI, Nan, Jiading Shanghai 201804 (CN); TIAN, Xiaotao, Jiading Shanghai 201804 (CN); MA, Yongyue, Jiading Shanghai 201804 (CN); BENGTSSON, Jan, Jiading Shanghai 201804 (CN)
(74) Representative: Vossius & Partner Patentanwälte Rechtsanwälte mbB
(86) International application number: PCT/CN2018/084432
(87) International publication number: WO 2019/052183

(57) **Abstract**

The invention relates to a lifting system for battery swapping of a vehicle. The lifting system comprises: a positioning platform (1) for supporting a vehicle, the positioning platform (1) comprising a positioning structure (14) for defining a stop position of the vehicle and for positioning and adjusting front and rear wheels of the vehicle so as to adjust the vehicle to a first preset position; a lifting support platform (3) for lifting the vehicle on the positioning platform (1) so that the vehicle leaves the positioning mechanism (14) and is lifted to a preset battery swap position; and a lift executing mechanism (2) disposed on the positioning platform (1), the lifting support platform (3) being connected to the lift executing mechanism (2), and the lift executing mechanism (2) being used to drive the lifting support platform (3) to move in a vertical direction. The lifting system can quickly and accurately position an incoming vehicle and can ensure that the vehicle is lifted to the first preset position smoothly and steadily, increasing the efficiency and the accuracy of the battery swapping, thereby improving the user experience.

## Description

### Technical Field

The invention relates to the technical field of battery swapping for an electric vehicle, and in particular to a lifting system for battery swapping of a vehicle.

### Background Art

Electric vehicles are means of transportation that can be driven by electric energy stored in batteries, and thus reduce the vehicle's dependence on fossil fuels. The electric vehicle is an important measure to solve the national energy security problem. Traction batteries are the core of electric vehicles, but the range provided by a traction battery per charge is far from being comparable to that of a traditional means of transportation. Therefore, how to replenish the traction battery quickly and conveniently with electric energy becomes an important factor in the use and promotion of the electric vehicles, but in the current battery charging technology, charging cannot be completed in a few minutes just like refueling. Hence, battery swapping becomes the only possible way to replenish the electric vehicles with electric energy.

In the prior art, a four-column hoister is often used to position the vehicle, which runs through a ramp with a certain width and a long plate to a set position. However, such a positioning method has significant errors and may easily lead to wrong entry, and the demand on the driver's driving experience is extremely high. If the vehicle runs to an incorrect location, it needs to be adjusted continuously to the correct battery swap position before a battery pack can be swapped. Moreover, the lifting synchronization is poor, the positioning accuracy is low, the time for positioning is long, so the user experience is poor.

### Summary of the Invention

The technical problem to be solved by the invention is to provide a lifting system for battery swapping of a vehicle, which can quickly and accurately position an incoming vehicle and can ensure that the vehicle is lifted to a first preset position smoothly and steadily, improving the user experience.

In order to solve the above technical problem, the invention provides a lifting system for battery swapping of a vehicle, the lifting system comprising:
a positioning platform, a lift executing mechanism and a lifting support platform, wherein
the positioning platform is used to support a vehicle, and the positioning platform comprises a positioning structure for defining a stop position for the vehicle and for positioning and adjusting front and rear wheels of the vehicle so as to adjust the vehicle to a first preset position;
the lift executing mechanism is disposed on the positioning platform, the lifting support platform is connected to the lift executing mechanism, and the lift executing mechanism is used to drive the lifting support platform to move in a vertical direction; and
the lifting support platform is used to lift the vehicle on the positioning platform so that the vehicle leaves the positioning mechanism and is lifted to a preset battery swap position.

Further, provided that a travelling direction is an X-direction and a vehicle width direction is a Y-direction, the positioning platform further comprises:
a platform body for supporting the vehicle;
a ramp structure disposed at at least one end, in the X-direction, of the platform body; and
a guide structure disposed at two ends, in the Y-direction, of the platform body.

Further, the positioning structure comprises an X-direction positioning unit and a Y-direction positioning unit, wherein
the X-direction positioning unit is used to determine the stop position in the X-direction for an incoming vehicle; and
the Y-direction positioning unit is used for adjusting the positions of front wheels and of rear wheels in the Y-direction so as to perform positioning in the Y-direction.

Further, the positioning platform comprises a front-wheel support module and a rear-wheel support module respectively provided with the positioning structure; a plurality of platform modules arranged in a vehicle length direction are provided between the front-wheel support module and the rear-wheel support module, with a gap being provided between each two adjacent platform modules; and the gap is used for arrangement of a guide rail or a rack, the guide rail being used to provide a travelling track for a battery swap trolley to enter or exit the positioning platform and determine the travelling direction of the battery swap trolley, and the rack being used to mesh with a gear on the battery swap trolley.

Further, the positioning platform further comprises a guide rail and a rack, the guide rail and the rack being embedded in the positioning platform, wherein the guide rail is used to provide a travelling track for a battery swap trolley to enter or exit the positioning platform and determine a travelling direction of the battery swap trolley; and
the rack is used to mesh with a gear on the battery swap trolley to control the moving distance of the battery swap trolley.

Further, the lift executing mechanism comprises a main body frame and a synchronous lifting mechanism, wherein the structure of the main body frame comprises a plurality of column structures disposed at two ends of the positioning platform in the vehicle width direction, one end of the main body frame in the vertical direction is provided with the positioning platform, and the other end thereof in the vertical direction is provided with the synchronous lifting mechanism; and
the synchronous lifting mechanism comprises lifting belts and a driving portion, each of the lifting belts is provided at the respective column structure, one end of the lifting belt is connected to the driving portion and the other end thereof is provided as a free end, and the free end is connected to the lifting support platform.

Further, the driving portion comprises an electric motor, a transmission shaft and an endless transmission belt, wherein
the electric motor is connected to the transmission shaft for driving the transmission shaft to rotate;
the transmission shaft is connected to the endless transmission belt for driving the endless transmission belt to rotate; and
the endless transmission belt is connected to one end of the lifting belt for driving the free end of the lifting belt to ascend or descend along the column structure.

Further, the endless transmission belt comprises a driving wheel, a transmission belt and a driven wheel, wherein
the driving wheel is connected to the transmission shaft and rotates along with the rotation of the transmission shaft;
the transmission belt connects the driving wheel and the driven wheel to form a ring-shaped structure, and the transmission belt rotates clockwise or counterclockwise along with the rotation of the driving wheel and drives the driven wheel to rotate; and
the transmission belt comprises a first transmission section and a second transmission section which are respectively located between the driving wheel and the driven wheel, and the first transmission section and the second transmission section are respectively connected to one of the lifting belts.

Further, a deflection wheel is disposed between two ends of the lifting belt, and the lifting belt wraps around the deflection wheel, with one end connected to the lifting support platform and the other end connected to the first transmission section or the second transmission section.

Further, the lift executing mechanism further comprises a fall prevention portion, which is provided on the column structure, for supporting the lifting support platform in case of breakage or failure of the lifting belt, so as to prevent the lifting support platform from falling.

Further, the lifting support platform comprises a lifting frame and a support structure, wherein
the lifting frame is connected to the free end of the lifting belt; and
the support structure is disposed on the lifting frame for supporting a vehicle lift point.

Further, the support structure is provided with a photographing and positioning mechanism for photographing and positioning the vehicle and the battery swap trolley after the vehicle is lifted to a first preset height and the battery swap trolley enters an area under the vehicle.

Further, the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit provided in the support structure, for adjusting the position of the vehicle according to the obtained vehicle position deviation.

Further, there are a plurality of support structures for supporting different support points of the vehicle respectively, and the fine adjustment unit comprises a driving portion and a floating portion which are provided on different support structures and are arranged in a travelling direction; the driving portion drives the corresponding support structure to move in the travelling direction so as to drive the vehicle to move; and the floating portion is configured to float with the movement of the vehicle so as to adjust the position of the vehicle.

Further, the floating portion comprises:
a floating unit, a support unit and a restoring unit, wherein
the floating unit is supported on the support unit via universal balls and is able to float in a horizontal plane relative to the support unit; and
the restoring unit is connected to the floating unit for restoring the floating unit.

Further, the lift executing mechanism comprises a plurality of lifting columns, each lifting column comprising a housing, a driving mechanism provided in the housing and a lifting structure driven by the driving mechanism, and the driving mechanism drives the lifting structure to move in the vertical direction.

Further, the lifting support platform comprises a plurality of lifting push rods respectively used to support lift points of the vehicle, and the lifting push rods are in one-to-one correspondence with the lifting columns and are each driven to move in the vertical direction by the lifting structure of the corresponding lifting column.

The invention further provides a battery swap system comprising the lifting system.

The invention has obvious advantages and beneficial effects as compared with the prior art. By means of the above technical solutions, a lifting system for battery swapping of a vehicle of the invention can achieve considerable technical progress and practicality, has a wide range of industrial utility value, and has at least the following advantages:
(1) the invention has a simple structure, and can achieve quick and accurate positioning, and adjust the position of the vehicle to locate the vehicle in a preset battery swap position, saving on the time for battery swapping, increasing the accuracy and efficiency of battery swapping, and improving the user experience;
(2) the positioning platform can precisely position the battery swap trolley, so that the battery swap trolley can enter the positioning platform smoothly and accurately, thereby increasing the accuracy and efficiency of battery swapping;
(3) the ramp structure can be in a folded state or a deployed state, reducing the space occupied by the positioning platform;
(4) the gap portion between the components of the positioning platform is filled with a fiber-reinforced plastic grille, which not only ensures the smooth entry of the vehicle into the positioning platform, but also reduces the weight of the positioning platform;
(5) the lift executing mechanism realizes synchronous lifting, and can ensure smooth ascending and descending processes of a vehicle; and
(6) the various components of the lifting system can be separately used, thus achieving modularization, easy installation, convenient use and low costs.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic diagram of a lifting system for battery swapping of a vehicle provided in an embodiment of the invention.
Fig. 2 is an exploded view of a lifting system for battery swapping of a vehicle provided in an embodiment of the invention.
Fig. 3 is a schematic diagram of a positioning platform provided in an embodiment of the invention.
Fig. 4 is a schematic diagram of a lift executing mechanism and a lifting support platform provided in an embodiment of the invention.
Fig. 5 is a schematic diagram of a transmission belt in a clockwise rotation provided in an embodiment of the invention.
Fig. 6 is a schematic diagram of a transmission belt in a counterclockwise rotation provided in an embodiment of the invention.
Fig. 7 is a schematic diagram of a photographing and positioning mechanism provided in an embodiment of the invention.
Fig. 8 is a schematic diagram of the arrangement of a fine adjustment unit provided in an embodiment of the invention.
Fig. 9 is a sectional view taken along A-A of Fig. 8.
Fig. 10 is a schematic diagram of a lifting system for battery swapping of a vehicle provided in another embodiment of the invention.

**[Description of Symbols]**

| | |
|---|---|
| 1: Positioning platform | 2: Lift executing mechanism |
| 3: Lifting support platform | 11: Platform body |
| 12: Ramp structure | 13: Guide structure |
| 14: Positioning structure | 15: Guide rail |
| 16: Guide bar | 17: X-direction positioning unit |
| 18: Y-direction positioning unit | 21: Main body frame |
| 22: Synchronous lifting mechanism | 31: Lifting frame |
| 32: Support structure | |

### Detailed Description of Embodiments

In order to further illustrate the technical means used to achieve the intended purpose of the invention and the technical effects of the invention, the implementation of a lifting system for battery swapping of a vehicle proposed in the invention and the effects thereof are described in detail hereinafter in conjunction with the accompanying drawings and the preferred embodiments.

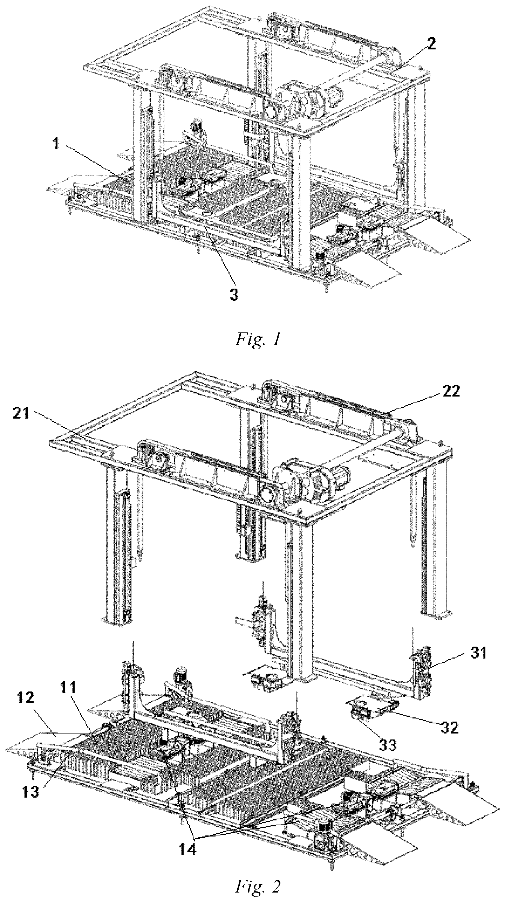

As shown in Figs. 1 and 2, the invention provides a lifting system for battery swapping of a vehicle. The lifting system comprises: a positioning platform 1, a lift executing mechanism 2, and a lifting support platform 3, wherein the positioning platform 1 is used to support a vehicle, and the positioning platform 1 comprises a positioning structure 14 for defining a stop position of the vehicle and for positioning and adjusting front and rear wheels of the vehicle to adjust the vehicle to a first preset position; and the first preset position refers to the corresponding battery swap position when the vehicle is located on the positioning platform 1. The lift executing mechanism 2 is disposed on the positioning platform 1, the lifting support platform 3 is connected to the lift executing mechanism, and the lift executing mechanism 2 drives the lifting support platform 3 to move in a vertical direction; and the lifting support platform 3 is used to lift the vehicle on the positioning platform 1 so that the vehicle leaves the positioning mechanism 14 and is lifted to a preset battery swap position.

It should be noted that, the preset battery swap position is not limited to one height value, and may also be a height range, that is, the vehicle is allowed to be re-adjusted within a certain height range. For example, in some embodiments, the vehicle can be lifted to and maintained at a predetermined height first, and the position of the battery swap trolley is then adjusted to perform the battery swap operation, in which case the predetermined height value is the preset battery swap position. In other embodiments, the vehicle can be lifted to a certain position within the height range first, and then the vehicle is re-adjusted according to the position of the battery swap trolley so as to ascend or descend in the height range to match the position of the battery swap trolley, in which case the height range is collectively referred to as the preset battery swap position. In summary, the preset battery swap position is not a fixed position, but a range of positions where the battery swapping can be implemented. The lifting support platform 3 can subsequently adjust the height and horizontal position of the vehicle within the range of positions where the battery swapping can be implemented according to the lifting height and horizontal position of the battery swap trolley, such that the vehicle and the battery swap trolley are aligned for battery swapping, and this range of positions where the battery swapping can be implemented are all the preset battery swap position.

The vehicle of the invention generally refers to a vehicle having a swappable battery pack and is not limited to only a battery electric vehicle, and may also be a hybrid vehicle.

Each of the components of the lifting system for battery swapping of a vehicle is described in detail as follows:

### (I) Positioning Platform

As shown in Fig. 2, the positioning platform 1 comprises a platform body 11 for supporting a vehicle, a ramp structure 12 for guiding the vehicle to enter and exit the platform body 11, and a guide structure 13 for guiding the vehicle when it enters the platform body 11.

The platform body 11 is used to support the vehicle, allowing the vehicle to travel to a battery swap position. The gap between the components of the platform body 11 may be filled with a fiber-reinforced plastic grille, which not only ensures the smooth entry of the vehicle into the positioning platform 1, but also reduces the weight of the positioning platform 1.

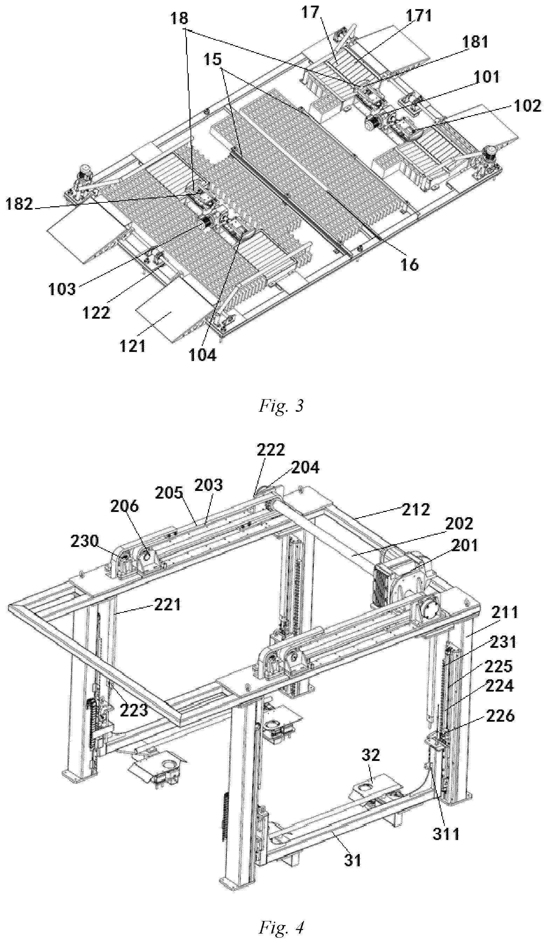

In the example shown in Fig. 3, the ramp structure 12 is provided at either end of the platform body 11 in the travelling direction, or may be provided at only one end thereof. The ramp structure 12 comprises a ramp body 121 and a spindle 122. The ramp body 121 is connected to the platform body 11 via the spindle 122 and is turned around the spindle 122 such that the ramp structure 12 is folded or deployed. When the vehicle enters and exits the positioning platform 1, the ramp structure 12 is deployed; whereas in other cases, the ramp structure 12 can be folded to reduce the area occupied by the battery swap system.

The guide structure 13 corresponds to the ramp structure 12, is disposed on the platform body 11, and extends to the ramp structure 12. Specifically, the guide structure 13 comprises guide members arranged in pairs respectively at two ends of the platform body 11 in the vehicle width direction, and the space between the guide members at both ends is defined as an area that allows passage of the vehicle, thereby preventing the vehicle, during entering and exiting the platform body 11, from deviating from the trajectory and from falling off the platform body 11. As an example, the guide structure 13 consists of guide rods, and the extension direction of the guide rods is substantially parallel to the travelling direction. During the entry of a vehicle, the ramp structure 12 and the guide structure 13 can together be used as a reference for guiding the vehicle to enter the positioning platform 1 in a forward direction, enabling the stop position to be closer to an ideal position.

After the vehicle enters the platform body 11, the front and rear wheels of the vehicle will be positioned and adjusted through the positioning structure 14, so as to adjust the vehicle to the first preset position.

As shown in Fig. 3, the positioning platform 1 further comprises a guide rail 15 and a rack 16. The guide rail 15 and the rack 16 are embedded in the platform body 11 and are in the same plane as the positioning platform 1, so as to ensure rolling stability and high control precision of the vehicle, which can reduce the time for battery swapping. The guide rail 15 and rack 16 are both located in a region of the positioning platform 1 corresponding to a battery pack in a vehicle chassis when the battery swapping of the vehicle is implemented, wherein the guide rail 15 is used to provide a travelling track for the battery swap trolley to enter or exit the positioning platform 1, and determine a travelling direction of the battery swap trolley; and the rack 16 is used to mesh with a gear on the battery swap trolley to control the moving distance of the battery swap trolley. The movement direction and distance accuracy of the battery swap trolley is increased by arranging the guide rail 15 and the rack 16, thereby increasing the accuracy and efficiency of battery swapping.

In some embodiments, both the guide rail 15 and the rack 16 are parallel to a Y-direction, the positioning platform 1 comprises two guide rails 15, and the rack 16 is disposed between the two guide rails 15.

In the example shown in Fig. 3, the travelling direction is the X-direction and the vehicle width direction is the Y-direction. The positioning structure 14 comprises an X-direction positioning unit 17 for adjusting the position of the vehicle in the X-direction and a Y-direction positioning unit 18 for adjusting the position of the vehicle in the Y-direction.

The X-direction positioning unit 17 comprises grooves 171 for supporting wheels, which may be the front wheels or the rear wheels. The incoming vehicle is determined to be in the stop position in the X-direction when the wheels enter the grooves 171. A description will be given with the X-direction positioning unit 17 being used for supporting the front wheels of the vehicle. The Y-direction positioning unit 18 comprises a front-wheel Y-direction positioning unit 181 and a rear-wheel Y-direction positioning unit 182 respectively disposed at positions corresponding to the front wheels and the rear wheels of the vehicle. The front-wheel Y-direction positioning unit 181 comprises a front-wheel push rod motor 101 and front-wheel push rods 102 provided at two ends of the front-wheel push rod motor 101 in the Y-direction; the front-wheel push rod motor 101 is used to drive the front-wheel push rods 102 to move; and the front-wheel push rods 102 are used to push the front wheels to move, so as to position the front wheels in the Y-direction. The rear-wheel Y-direction positioning unit 182 comprises a rear-wheel push rod motor 103 and rear-wheel push rods 104 disposed at two ends of the rear-wheel push rod motor 103 in the Y-direction; the rear-wheel push rod motor 103 is used to drive the rear-wheel push rods 104 to move; and the rear-wheel push rods 104 are used to push the rear wheels to move, so as to position the rear wheels in the Y-direction.

The positioning platform 1 further comprises a control module (not shown in the figures). The control module comprises: a ramp structure control unit for controlling the ramp structure into a folded state or a deployed state; an electric motor control unit for controlling the operating states of the front-wheel push rod motor and the rear-wheel push rod motor; and a battery swap trolley control unit for controlling an entry position of the battery swap trolley.

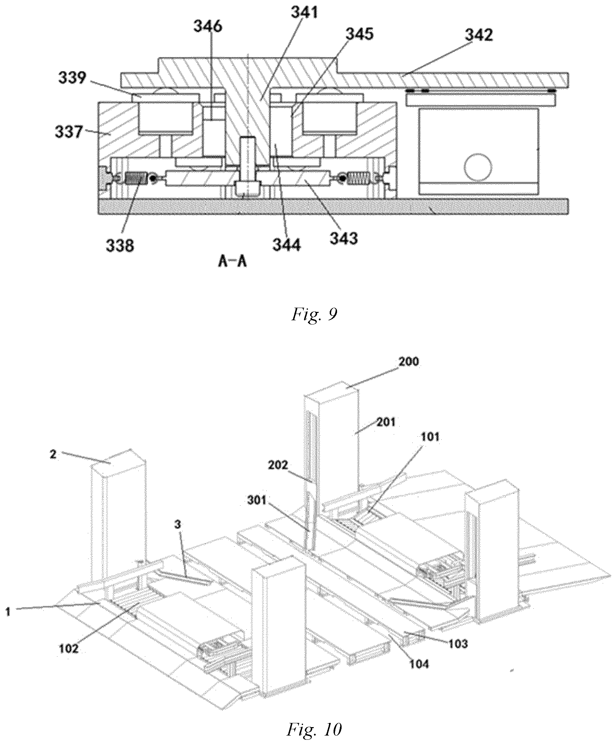

The positioning platform 1 shown in Figs. 1 and 2 is only an example. The practical application is not limited to the aforementioned compositional structure. As a variant of the positioning platform 1 shown in Fig. 2, the positioning platform 1 can also be provided in a modular form, such as a positioning platform 1 in an automated battery swap system of the electric vehicle shown in Fig. 10. Further, the positioning platform 1 comprises a front-wheel support module 101 and a rear-wheel support module 102 respectively provided with the positioning structure 14. A plurality of platform modules 103 arranged in the vehicle length direction are provided between the front-wheel support module 101 and the rear-wheel support module 102. There is a gap 104 between each two adjacent platform modules 103, and the gap 108 is used to arrange a guide rail 15 or a rack. The guide rail 15 is used to provide a travelling track for a battery swap trolley 5 to enter or exit the positioning platform 1 and determine a travelling direction of the battery swap trolley 5. The rack is used to mesh with a gear on the battery swap trolley to control the moving distance of the battery swap trolley 5. The positioning platform 1 is modularly configured, so that each module can be disassembled and assembled independently for easy transportation and installation.

It should be noted that except for the above-described variation features of the positioning platform 1 shown in Figs. 1 and 2, other components in the structure of the positioning platform 1 shown in Fig. 10 may be the same, for example, the guide structure 13, the ramp structure 12 and the positioning structure 14.

### (II) Lift Executing Mechanism

As shown in Fig. 2, the lift executing mechanism 2 comprises a main body frame 21 and a synchronous lifting mechanism 22, wherein the structure of the main body frame 21 comprises a plurality of column structures 211 and cross beams 212. The plurality of column structures 211 are connected via the plurality of cross beams 212. The plurality of column structures 211 are disposed at two ends of the positioning platform 1 in the vehicle width direction. One end of the main body frame 21 in the vertical direction is provided with the positioning platform 1, and the other end thereof is provided with the synchronous lifting mechanism 22. In some embodiments, the frame structure 21 comprises four column structures 211 evenly distributed at four corners of the positioning platform 21 in the circumferential direction.

As shown in Fig. 4, the synchronous lifting mechanism 22 comprises lifting belts 221 and a driving portion 222. The lifting belt 221 may be of a belt-like structure or a chain-like structure, such as a belt and a chain. Each of the lifting belts 221 is provided at the respective column structure 211, one end of the lifting belt 221 is connected to the driving portion 222, and the other end thereof is provided as a free end 223. The free end 223 is connected to the lifting support platform 3. The column structure 221 may also be provided with a guide portion 224 for guiding the lifting support platform 3 to move up and down in the direction of the column structure 221 so as to prevent the deviation of the direction and to make the lifting process more stable with less noise, and to adapt to the external environment better. The guide portion 224 may comprise a slide rail 225 and a slider 226. The slide rail 225 is disposed on the column structure 221 and extends in a longitudinal direction of the column structure 221. The slider 226 is disposed on the slide rail 225 and connected to the lifting support platform 3. The slider 226 moves along the slide rail 225 in the process of the lifting support platform 3 moving along the column structure 221.

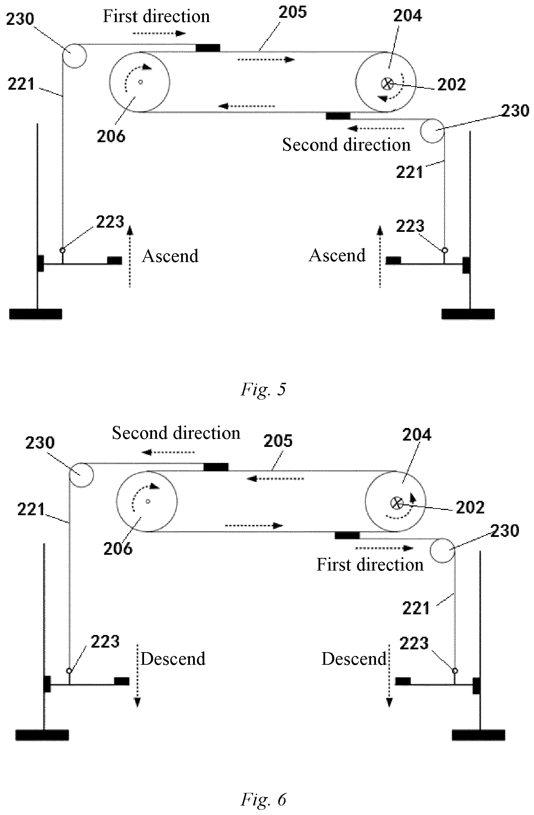

In the example shown in Fig. 4, the driving portion 222 comprises an electric motor 201, a transmission shaft 202, and an endless transmission belt 203. The endless transmission belt 203 may be a belt-like structure or a chain-like structure such as a belt and a chain. The electric motor 201 is connected to the transmission shaft 202 for driving the transmission shaft 202 to rotate; the transmission shaft 202 is connected to the endless transmission belt 203 for driving the endless transmission belt 203 to rotate; and the endless transmission belt 203 is connected to one end of the lifting belt 221 for driving the free end 223 of the lifting belt 221 to ascend or descend along the column structure 211. The endless transmission belt 203 comprises a driving wheel 204, a transmission belt 205 and a driven wheel 206, wherein the driving wheel 204 is connected to the transmission shaft 202 and rotates along with the rotation of the transmission shaft 202; the transmission belt 205 connects the driving wheel 204 and the driven wheel 206 to form a ring-shaped structure, and the transmission belt 205 rotates clockwise or counterclockwise along with the rotation of the driving wheel 204 and drives the driven wheel 206 to rotate; and the transmission belt 205 comprises a first transmission section 207 and a second transmission section 208 which are respectively located between the driving wheel 204 and the driven wheel 206, and the first transmission section 207 and the second transmission section 208 are respectively connected to one of the lifting belts 221, as shown in Figs 5 and 6.

A deflection wheel 230 is disposed between two ends of the lifting belt 22, and the lifting belt 221 wraps around the deflection wheel 230, with one end connected to the lifting support platform 3, and the other end connected to the first transmission section 207 or the second transmission section 208 of the transmission belt 205.

In the example shown in Fig. 5, the transmission belt 205 rotates clockwise, the first transmission section 207 moves in a first direction and the second transmission section 208 moves in a second direction, driving the free end 223 of the lifting belt 221 to ascend along the column structure 211, thereby driving the lifting support platform 3 to ascend. During battery swapping, the vehicle is placed on the lifting support platform 3, and the vehicle is raised along with the lifting support platform 3.

In the example shown in Fig. 6, the transmission belt 205 rotates counterclockwise, the first transmission section 207 moves in the second direction and the second transmission section 208 moves in the first direction, driving the free end 223 of the lifting belt 221 to descend along the column structure 211, thereby driving the lifting support platform 3 to descend. During the battery swapping, the vehicle is placed on the lifting support platform 3, and the vehicle descends along with the lifting support platform 3.

In some embodiments, the lift executing mechanism further comprises a fall prevention portion 231 disposed on the column structure 221 for preventing the lifting support platform 3 from falling down, so as to ensure safety and reliability. The fall prevention portion 231 may be a ratchet mechanism.

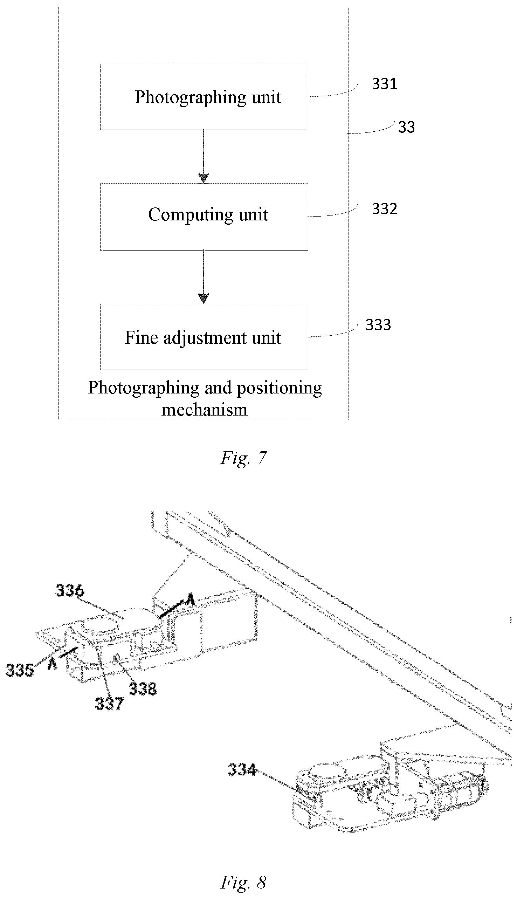

The lift executing mechanism 2 shown in Figs. 2 and 4 is only an example. The practical application is not limited to the aforementioned compositional structure. As a variant of the lift executing mechanism 2 shown in Fig. 2, a lift executing mechanism 2 in the automated battery swap system of the electric vehicle is shown in Fig. 10. The lift executing mechanism 2 comprises a plurality of lifting columns 200. Each lifting column 200 comprises a housing 201, a driving mechanism (not shown in the figures) provided in the housing 201 and a lifting structure 202 driven by the driving mechanism, and the driving mechanism moves the lifting structure 202 in the vertical direction. In the example shown in Fig. 8, there are four lifting columns 200, which are evenly distributed at two ends of the positioning platform 1 in the vehicle width direction, that is, two symmetrically arranged lifting columns are correspondingly disposed at either end. The lifting columns 200 are arranged to be controlled independently, enabling multiple lifting columns 200 to be controlled synchronously.

### (III) Lifting Support Platform

As shown in Fig. 4, the lifting support platform 3 comprises a lifting frame 31 and a support structure 32, wherein the lifting frame 31 is connected to the free end 223 of the lifting belt 221; and the support structure 32 is disposed on the lifting frame 31 for supporting a vehicle lift point. A description will be given below, still taking the lift executing mechanism 2 comprising four column structures 211 evenly arranged on the positioning platform 1 as an example. The lifting frame 31 may be provided with four lifting arms 311 in one-to-one correspondence with the four column structures 221. The lifting arms 311 are connected to the lifting belts 221 and the sliders 224. In an initial position, the lifting arms 311 are in contact with the positioning platform 1, so that the support structure 32 is flush with a surface of the positioning platform 1, and while the vehicle is entering the positioning platform 1, the vehicle wheels run over the support structure 32. There may also be four support structures evenly distributed on the lifting frame 31, for supporting four lift points of the vehicle respectively.

In some embodiments, after the vehicle is coarsely positioned by the positioning platform 1, the lifting support platform 3 lifts the vehicle to a first preset height, which is the height of the vehicle, when in place for battery swapping, from the positioning platform 1. At this time, the position of the vehicle in the horizontal plane may be deviated from the accurate first preset position to some extent. Therefore, a photographing and positioning mechanism 33 may be provided to further adjust the position of the vehicle, so as to increase the accuracy and efficiency of battery swapping. Specifically, the photographing and positioning mechanism 33 is disposed on the support structure 32. The photographing and positioning mechanism 33 is used for photographing and positioning the vehicle and the battery swap trolley after the vehicle finishes positioning on the positioning platform 1 and is lifted to the first preset height by the lifting support platform 3 and the battery swap trolley enters an area under the vehicle. The battery swap trolley is provided with a positioning pin for cooperating with a positioning hole of the vehicle body so as to align the battery swap trolley with the battery swap position.

In the example shown in Fig. 7, the photographing and positioning mechanism 33 comprises a photographing unit 331, a computing unit 332, and a fine adjustment unit 333, wherein the photographing unit 331 is used to photograph the positioning hole of the vehicle body and the positioning pin of the battery swap trolley to obtain photographic data, and the photographing unit 331 may be a camera; the computing unit 332 is used to compute a current vehicle position deviation according to the photographic data; and the fine adjustment unit 333 is used to adjust the support structure 32 according to the obtained vehicle position deviation so as to adjust the position of the vehicle.

In some other embodiments, the battery swap trolley is provided with a floating mechanism which enables the battery swap trolley to be adjusted in the horizontal plane to align same with the battery swap position. In this case, the photographing and positioning mechanism 33 may not be provided, if the amount by which the floating mechanism floats is sufficient to counteract the plane deviation between the battery swap trolley and the vehicle. However, it is to be understood that, it is possible to provide both the photographing and positioning mechanism 33 and the floating mechanism, and the battery swap trolley may be aligned with the battery swap position by adjusting the position of the vehicle in the horizontal plane and the position of the battery swap trolley in the horizontal plane.

As shown in Fig. 8, there are a plurality of support structures 32 for supporting different support points of the vehicle respectively, and the fine adjustment unit 333 comprises a driving portion 334 and a floating portion 335 which are provided on different support structures 32 and are arranged in a travelling direction. The driving portion 334 drives the corresponding support structure 32 to move in the travelling direction, to move the corresponding vehicle lift point, so as to drive the vehicle to move. The floating portion 335 is configured to float with the movement of the vehicle so as to adjust the position of the vehicle, and the fine adjustment unit 333 comprises at least one driving portion 334. Other portions thereof in contact with the vehicle are all provided as floating portions 334 that float with the movement of the vehicle.

The floating portion 335 comprises: a floating unit 336, a support unit 337 and a restoring unit 338. The floating unit 336 is supported on the support unit 337 via universal balls 339 and is able to float in a horizontal plane relative to the support unit 337. The restoring unit 338 is connected to the floating unit 336 for restoring the floating unit 336.

As shown in Fig. 9, the floating unit 336 comprises: a connecting 337 post 341, and a first floating plate 342 and a second floating plate 343 which are respectively connected to two ends of the connecting post 341 and are parallel to each other. The support unit 337 is provided with a through hole 344 for the connecting post 341 to pass through, the first floating plate 342 and the second floating plate 343 are respectively located outside the through hole 344 and are in rolling contact with the support unit 337 via the universal balls 339, and a floating gap 346 is provided between the connecting post 341 and a through-hole wall 345. At least one of the first floating plate 342 and the second floating plate 343 is provided with the restoring unit 338.

The lifting support platform 3 shown in Figs. 1 and 4 is only an example. The practical application is not limited to the aforementioned compositional structure. As a variant of the lifting support platform 3 shown in Fig. 2, a lifting support platform 3 in the automated battery swap system of the electric vehicle is shown in Fig. 10. The lifting support platform 3 further comprises a plurality of lifting push rods 301 for supporting the lift points of the vehicle respectively. The lifting push rods 301 are in one-to-one correspondence with the lifting columns 200 and are each driven by the lifting structure 202 of the corresponding lifting column 200 to move in the vertical direction. The lifting columns 200 shown in Fig. 10 are arranged to be controlled independently, enabling multiple lifting columns 200 to be controlled synchronously. The multiple lifting columns 200 can also be separately controlled to compensate for the lift point unlevelness generated due to the weight deviation of the vehicle body. That is to say, when the heights of the lift points of the vehicle are deviated from each other, each lifting column 200 can be separately controlled to bring the plurality of lift points to the same height, thereby increasing the battery swapping accuracy.

The invention further comprises a battery swap system, comprising the lifting system of the invention and a battery swap trolley.

Based on the aforementioned battery swap system, the following steps are performed for a battery swap.

In Step 1, before the vehicle enters, the ramp structure 12 is controlled such that same deploys automatically.

In Step 2, when the vehicle enters, the travelling direction is determined according to the positions of the ramp structure 12 and the guide structure 13, and the vehicle is controlled such that same enters the positioning platform.

In Step 3, the front and rear wheels of the vehicle are positioned and adjusted by means of the positioning structure 14, to adjust the vehicle to the first preset position, at which time the vehicle is placed on the lifting support platform 3.

In Step 4, the lift executing mechanism 2 lifts the vehicle to the preset height by hoisting the lifting support platform 3.

In Step 5, the battery swap trolley is controlled to make same enter the positioning platform 1 to swap the battery pack for the vehicle.

It should be noted that, after entering the positioning platform 1, the battery swap trolley can come into contact with the vehicle chassis by lifting the battery swap trolley as a whole, or by lifting the tightening mechanism of the battery swap trolley. If the battery swap trolley and the tightening mechanism have a limited hoisting height which is not enough to bring the battery swap trolley into contact with the vehicle chassis, the battery swap trolley may be brought into contact with the vehicle by lowering the height of the vehicle to reach a precise battery swap position in the height direction.

In the horizontal plane, the positioning of the vehicle in the horizontal plane can be adjusted by means of the photographing and positioning mechanism 33 provided on the lifting support platform 3, or the positioning of the battery swap trolley in the horizontal plane can be adjusted by means of the floating mechanism provided on the battery swap trolley, or both the photographing and positioning mechanism 33 and the floating mechanism are provided such that the vehicle and the battery swap trolley achieve the accurate battery swap position in the horizontal plane by adjusting both the photographing and positioning mechanism 33 and the floating mechanism.

In Step 6, after the battery swapping is completed, the lift executing mechanism 2 lowers the vehicle to the positioning platform 1 by lowering the lifting support platform 3, the vehicle exits the positioning platform 1, and the ramp structure 12 is controlled such that same is folded, completing the battery swapping.

It should be noted that in various implementations, the battery swap height can all be reached by raising and lowering the vehicle or the battery swap trolley.

The embodiments of the invention provide a lifting system for battery swapping of a vehicle, a battery swap system and a battery swap method. The positioning platform 1 has a simple structure, can achieve quick and accurate positioning, and can precisely adjust the position of the vehicle to locate the vehicle in the preset battery swap position, saving on the time for battery swapping, and increasing the accuracy and efficiency of battery swapping. The positioning platform 1 can also precisely position the battery swap trolley, so that the battery swap trolley can enter the positioning platform smoothly and accurately, thereby increasing the accuracy and efficiency of battery swapping. In addition, the ramp structure 12 can be in a folded state or a deployed state, reducing the space occupied by the positioning platform 1. The gap portion between the components of the positioning platform 1 is filled with a fiber-reinforced plastic grille, which not only ensures the smooth entry of the vehicle into the positioning platform 1, but also reduces the weight of the positioning platform 1. The lift executing mechanism 2 realizes synchronous lifting, and can ensure smooth ascending and descending processes of a vehicle. The photographing and positioning unit 33 of the lifting support platform 3 can also adjust the position of the vehicle to further improve the battery swapping precision. The components of the lifting system can be separately used, thus achieving modularization, easy installation, convenient use and low costs. The invention can meet various requirements of users, save time for the users and improve the user experience.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A lifting system for battery swapping of a vehicle, **characterized in that** the lifting system comprises:
a positioning platform, a lift executing mechanism and a lifting support platform, wherein
the positioning platform is used to support a vehicle, and the positioning platform comprises a positioning structure for defining a stop position for the vehicle and for positioning and adjusting front and rear wheels of the vehicle so as to adjust the vehicle to a first preset position;
the lift executing mechanism is disposed on the positioning platform, the lifting support platform is connected to the lift executing mechanism, and the lift executing mechanism is used to drive the lifting support platform to move in a vertical direction; and
the lifting support platform is used to lift the vehicle on the positioning platform so that the vehicle leaves the positioning mechanism and is lifted to a preset battery swap position.

2. The lifting system for battery swapping of a vehicle according to claim 1, **characterized in that**
provided that a travelling direction is an X-direction and a vehicle width direction is a Y-direction, the positioning platform further comprises:
a platform body for supporting the vehicle;
a ramp structure disposed at at least one end, in the X-direction, of the platform body; and
a guide structure disposed at two ends, in the Y-direction, of the platform body.

3. The lifting system for battery swapping of a vehicle according to claim 1, **characterized in that**
the positioning structure comprises an X-direction positioning unit and a Y-direction positioning unit, wherein
the X-direction positioning unit is used to determine the stop position in the X-direction for an incoming vehicle; and
the Y-direction positioning unit is used for adjusting the positions of front wheels and of rear wheels in the Y-direction so as to perform positioning in the Y-direction.

4. The lifting system for battery swapping of a vehicle according to claim 1, **characterized in that**
the positioning platform comprises a front-wheel support module and a rear-wheel support module respectively provided with the positioning structure; a plurality of platform modules arranged in a vehicle length direction are provided between the front-wheel support module and the rear-wheel support module, with a gap being provided between each two adjacent platform modules; and the gap is used for arrangement of a guide rail or a rack, the guide rail being used to provide a travelling track for a battery swap trolley to enter or exit the positioning platform and determine the travelling direction of the battery swap trolley, and the rack being used to mesh with a gear on the battery swap trolley.

5. The lifting system for battery swapping of a vehicle according to claim 2, **characterized in that**
the positioning platform further comprises a guide rail and a rack, the guide rail and the rack being embedded in the positioning platform, wherein the guide rail is used to provide a travelling track for a battery swap trolley to enter or exit the positioning platform and determine a travelling direction of the battery swap trolley; and
the rack is used to mesh with a gear on the battery swap trolley to control the moving distance of the battery swap trolley.

6. The lifting system for battery swapping of a vehicle according to claim 1, **characterized in that**
the lift executing mechanism comprises a main body frame and a synchronous lifting mechanism, wherein the structure of the main body frame comprises a plurality of column structures disposed at two ends of the positioning platform in the vehicle width direction, one end of the main body frame in the vertical direction is provided with the positioning platform, and the other end thereof in the vertical direction is provided with the synchronous lifting mechanism; and
the synchronous lifting mechanism comprises lifting belts and a driving portion, each of the lifting belts is provided at the respective column structure, one end of the lifting belt is connected to the driving portion and the other end thereof is provided as a free end, and the free end is connected to the lifting support platform.

7. The lifting system for battery swapping of a vehicle according to claim 6, **characterized in that**
the driving portion comprises an electric motor, a transmission shaft and an endless transmission belt, wherein
the electric motor is connected to the transmission shaft for driving the transmission shaft to rotate;
the transmission shaft is connected to the endless transmission belt for driving the endless transmission belt to rotate; and
the endless transmission belt is connected to one end of the lifting belt for driving the free end of the lifting belt to ascend or descend along the column structure.

8. The lifting system for battery swapping of a vehicle according to claim 7, **characterized in that**
the endless transmission belt comprises a driving wheel, a transmission belt and a driven wheel, wherein
the driving wheel is connected to the transmission shaft and rotates along with the rotation of the transmission shaft;
the transmission belt connects the driving wheel and the driven wheel to form a ring-shaped structure, and the transmission belt rotates clockwise or counterclockwise along with the rotation of the driving wheel and drives the driven wheel to rotate; and
the transmission belt comprises a first transmission section and a second transmission section which are respectively located between the driving wheel and the driven wheel, and the first transmission section and the second transmission section are respectively connected to one of the lifting belts.

9. The lifting system for battery swapping of a vehicle according to claim 8, **characterized in that**
a deflection wheel is disposed between two ends of the lifting belt, and the lifting belt wraps around the deflection wheel, with one end connected to the lifting support platform and the other end connected to the first transmission section or the second transmission section.

10. The lifting system for battery swapping of a vehicle according to claim 6, **characterized in that**
the lift executing mechanism further comprises a fall prevention portion, which is provided on the column structure, for supporting the lifting support platform in case of breakage or failure of the lifting belt, so as to prevent the lifting support platform from falling.

11. The lifting system for battery swapping of a vehicle according to claim 6, **characterized in that**
the lifting support platform comprises a lifting frame and a support structure, wherein
the lifting frame is connected to the free end of the lifting belt; and
the support structure is disposed on the lifting frame for supporting a vehicle lift point.

12. The lifting system for battery swapping of a vehicle according to claim 11, **characterized in that**
the support structure is provided with a photographing and positioning mechanism for photographing and positioning the vehicle and the battery swap trolley after the vehicle is lifted to a first preset height and the battery swap trolley enters an area under the vehicle.

13. The lifting system for battery swapping of a vehicle according to claim 12, **characterized in that**
the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit provided in the support structure, for adjusting the position of the vehicle according to the obtained vehicle position deviation.

14. The lifting system for battery swapping of a vehicle according to claim 13, **characterized in that**
there are a plurality of support structures for supporting different support points of the vehicle respectively, and the fine adjustment unit comprises a driving portion and a floating portion which are provided on different support structures and are arranged in a travelling direction; the driving portion drives the corresponding support structure to move in the travelling direction so as to drive the vehicle to move; and the floating portion is configured to float with the movement of the vehicle so as to adjust the position of the vehicle.

15. The lifting system for battery swapping of a vehicle according to claim 14, **characterized in that**
the floating portion comprises:
a floating unit, a support unit and a restoring unit, wherein
the floating unit is supported on the support unit via universal balls and is able to float in a horizontal plane relative to the support unit; and
the restoring unit is connected to the floating unit for restoring the floating unit.

16. The lifting system for battery swapping of a vehicle according to claim 1 or 4, **characterized in that**
the lift executing mechanism comprises a plurality of lifting columns, each lifting column comprising a housing, a driving mechanism provided in the housing and a lifting structure driven by the driving mechanism, and the driving mechanism drives the lifting structure to move in the vertical direction.

17. The lifting system for battery swapping of a vehicle according to claim 16, **characterized in that**
the lifting support platform comprises a plurality of lifting push rods respectively used to support lift points of the vehicle, and the lifting push rods are in one-to-one correspondence with the lifting columns and are each driven to move in the vertical direction by the lifting structure of the corresponding lifting column.

18. A battery swap system, **characterized by** comprising a lifting system as claimed in any one of claims 1-17.
